# EUROPÄISCHE PATENTSCHRIFT

(11) **EP 2 395 263 B1**
(45) Veröffentlichungstag und Bekanntmachung des Hinweises auf die Patenterteilung: **16.10.2013**
(21) Anmeldenummer: 11164747.5
(22) Anmeldetag: 04.05.2011
(51) Int. Cl.: F16H 57/02, F16H 63/30, F16D 25/08

(54) **Fahrzeuggetriebe**
Vehicle transmission
Engrenage de véhicule

(30) Priorität: 09.06.2010 DE 102010029861
(43) Veröffentlichungstag der Anmeldung: 14.12.2011
(73) Patentinhaber: ZF Friedrichshafen AG, 88038 Friedrichshafen (DE)
(72) Erfinder: Höring, Gerhard, 88709, Hagnau (DE)

(56) Entgegenhaltungen:
- EP-A2- 0 903 475
- DE-A1- 10 049 459
- DE-A1- 10 347 493
- DE-A1-102005 021 760
- DE-A1-102006 031 444
- DE-A1-102007 027 769
- US-A- 4 625 840

## Beschreibung

Die vorliegende Erfindung betrifft ein Fahrzeuggetriebe gemäß dem Oberbegriff des Anspruches 1.

Insbesondere Getriebe im Antriebsstrang von Nutzfahrzeugen weisen häufig eine hohe Anzahl an Gangstufen auf. Zur Realisierung einer so hohen Anzahl an Gängen haben sich Mehrgruppengetriebe als vorteilhaft erwiesen. Die hohe Gangzahl und der Aufbau eines Mehrgruppengetriebes verursachen jedoch auch einen komplexen Schaltablauf. Deshalb sind derartige Mehrgruppengetriebe in der Regel als automatisierte Getriebe ausgeführt, um für den Fahrer trotz des komplexen Schaltablaufes ein komfortables und sicheres Fahren zu ermöglichen. Die verschiedenen Schaltungen werden in einem automatisierten Getriebe beispielsweise mittels pneumatisch betätigter Schalteinrichtungen bewirkt. Dies sind in der Regel pneumatische Kolben-Zylinder-Einheiten, die über elektronisch ansteuerbare Pneumatikventile mit Druckluft versorgt werden. Weitere Elemente der Steuerung eines automatisierten Fahrzeuggetriebes sind verschiedene Sensoren zur Erfassung verschiedener Schaltzustände und Betriebsbedingungen.

In modernen automatisierten Fahrzeuggetrieben sind zumindest einige der genannten elektronischen und pneumatischen Komponenten der Getriebesteuerung in einem so genannten Getriebesteller zusammengefasst und in das Gehäuse des Getriebes integriert. Dies hat jedoch zur Folge, dass Maßnahmen getroffen werden müssen, um die Abluft, die bei der Betätigung der pneumatischen Schalteinrichtungen erzeugt wird, aus dem Getriebegehäuse heraus zu führen. Dabei ist unter anderem der Aspekt der Schalldämmung, als auch der Aspekt des Schutzes des Getriebes und der Komponenten der Getriebesteuerung gegen schädliche Einflüsse von außen zu berücksichtigen.

Aus der DE 102005021760 A1 ist eine Lösung zur Entlüftung der pneumatischen Komponenten des Getriebestellers eines Mehrgruppengetriebes bekannt. Dazu ist im Gehäuse ein Entlüftungskanal vorgesehen, der sich von einer am Getriebegehäuse vorgesehenen Getriebetasche zum Einbau des Getriebestellers bis zu einem abtriebsseitig angeordneten Abtriebssensor erstreckt. Eine Entlüftung des Getriebeölraumes ist in der DE 102005021760 A1 nicht beschrieben.

Aus der DE 103 47 493 A1 ist ein Fahrzeuggetriebe mit einer antriebsseitig an einem Getriebegehäuse angeordneten Kupplungsglocke und mit pneumatischen Komponenten zum Betätigen von Schaltelementen und einer Anfahrkupplung bekannt.

Des Weiteren ist aus der EP 0 903 475 A2 ein Entlüftungssystem für Fahrzeugaggregate, wie z.B. ein Getriebe bekannt, das einen Behälter aufweist, der die Abluft von einer pneumatischen Komponente des Fahrzeugaggregates versammelt und eine mit der Umgebung in Verbindung stehende Auslassöffnung aufweist, die eine Entlüftung des Behälters ermöglicht. Dabei kann der Behälter gleichzeitig dazu verwendet werden, um den Ölraum des Getriebes zu entlüften. Als Behälter kann gemäß der EP 0 903 475 A2 auch ein bereits bestehendes Kupplungsgehäuse verwendet werden.

Aus der DE 100 49 459 A1 ist ein Fahrzeuggetriebe nach dem Oberbegriff des Anspruchs 1 bekannt.

Es ist die Aufgabe der vorliegenden Erfindung ein Fahrzeuggetriebe zu schaffen, bei dem ein Getriebesteller mit pneumatischen Komponenten und der Getriebeölraum ausreichend entlüftet wird, wobei die Lärmemission minimiert und schädliche Einflüsse auf das Fahrzeuggetriebe von außen vermieden werden sollen.

Diese Aufgabe wird durch ein Fahrzeuggetriebe gemäß Patentanspruch 1 gelöst. Die abhängigen Ansprüche beinhalten bevorzugte Weiterbildungen der Erfindung.

Das erfindungsgemäße Fahrzeuggetriebe umfasst eine antriebsseitig an einem Getriebegehäuse angeordnete Kupplungsglocke und pneumatische Komponenten zum Betätigen von Schaltelementen und/oder einer Anfahrkupplung. In der Kupplungsglocke ist eine Trennwand vorgesehen, welche im Inneraum der Kupplungsglocke getriebeseitig von der Trennwand einen Entlüftungsraum ausbildet. Des Weiteren ist an der Kupplungsglocke zumindest eine Austrittsöffnung vorgesehen, die den Entlüftungsraum mit der Umgebung verbindet. Erfindungswesentlich ist weiterhin, dass die pneumatischen Komponenten derart in dem Getriebegehäuse angeordnet sind, dass die Abluft von den pneumatischen Betätigungselementen durch den Entlüftungsraum und die Austrittsöffnung in die Umgebung strömen kann. Die Austrittsöffnung kann auch mehrere separate Öffnungen umfassen.

Der durch den Einbau der Trennwand in der Kupplungsglocke entstandene Entlüftungsraum hat mehrere Funktionen. Erstens kann sich die aus den pneumatischen Komponenten austretende Abluft in dem Entlüftungsraum entspannen und beruhigen. Dadurch entfällt die Notwendigkeit von Rückschlagventilen.

Zweitens sorgt der Entlüftungsraum auch für eine Schalldämmung gegenüber der Umgebung. Die oft unter Druck aus den pneumatischen Komponenten austre-tende Luft verursacht beim Verlassen der Pneumatikventile bzw. Pneumatikzylinder häufig störende Geräusche, die beispielsweise durch spezielle Schalldämpfer an den Austrittsstellen gedämpft werden können. Durch die erfindungsgemäße Anordnung des Entlüftungsraumes werden solche Schalldämpfer überflüssig, da der Schall durch den Entlüftungsraum selber gedämpft wird und nicht in die Umgebung gelangt. An der Austrittsöffnung der Kupplungsglocke tritt die Abluft gleichmäßig und ruhig aus, so dass hier keine störenden Geräusche verursacht werden.

Die dritte Funktion des Entlüftungsraumes ist der Schutz der pneumatischen und elektronischen Komponenten im Getriebe vor Schmutz und Wassereintrag aus der Umgebung. Diese Funktion erfüllt der Entlüftungsraum insbesondere dann sehr gut, wenn die pneumatischen und elektronischen Komponenten der Getriebesteuerung gemäß einer bevorzugten Ausführung der Erfindung in der bestimmungsgemäßen Lage des Fahrzeuggetriebes an der Oberseite des Getriebes angeordnet sind und die Austrittsöffnung in der Kupplungsglocke an der Unterseite des Getriebes angeordnet ist.

Erfindungsgemäß dichtet die Trennwand den Entlüftungsraum zum antriebsseitigen Kupplungsraum in der Kupplungsglocke hin wasserdicht, öldicht und schmutzdicht ab. Dadurch ist auch die Anfahrkupplung im Kupplungsraum, die beispielsweise als Reibscheibenkupplung ausgeführt ist, vor schädlichen Einflüssen aus dem Entlüftungsraum geschützt. Andernfalls könnten beispielsweise die ölhaltige Druckluft aus dem Pneumatiksystem des Fahrzeuges oder Spritzwasser, das durch die Autrittsöffnung in die Kupplungsglocke eintritt, die Anfahrkupplung auf Dauer beschädigen.

Gemäß einer weiteren bevorzugten Ausführung der Erfindung ist im Getriebegehäuse eine Durchgangsöffnung vorgesehen, die einen Getriebeölraum mit dem Entlüftungsraum verbindet, wobei die Durchgangsöffnung derart angeordnet ist, dass sie in jeder bestimmungsgemäßen Lage des Fahrzeuggetriebes oberhalb des Ölspiegels in dem Getriebeölraum liegt. Mit dieser Ausführung wird der Entlüftungsraum zusätzlich für die Entlüftung des Getriebeinnenraumes, in dem sich das Getriebeöl befindet, genutzt. Herkömmliche Getriebe sind dazu beispielsweise mit einem separaten Entlüftungsventil ausgestattet. Dieses Entlüftungsventil oder andere separate Maßnahmen zur Entlüftung des Getriebeölraumes können mit der letztgenannten Ausführung der Erfindung eingespart werden. Der Getriebeinnenraum ist mit dieser Ausführung auch vor Schutz- und Wassereintrag durch die Getriebeentlüftung geschützt, weil Schutz bzw. Wasser entgegen der Schwerkraft durch das verhältnismäßig große Volumen des Entlüftungsraumes wandern müssten, um in den Getriebeinnenraum zu gelangen.

Die Trennwand wird zwangsläufig von einer Getriebeeingangswelle durchdrungen, welche die Anfahrkupplung mit dem Getriebe verbindet. Vorzugsweise ist der Entlüftungsraum auch zu der Getriebeeingangswelle hin abgedichtet, sodass auch auf diesem Weg keine schädlichen Einflüsse, wie Staub oder Wasser an die Eingangswelle und zur Anfahrkupplung gelangen können.

Ein weiterer Aspekt der Erfindung betrifft die Befestigung der Trennwand im Getriebe. In den Fällen, in denen ein zentraler Kupplungsausrücker koaxial zu der Getriebeeingangswelle im Kupplungsraum angeordnet ist, kann der Kupplungsausrücker gemeinsam mit der Trennwand antriebsseitig an dem Getriebegehäuse befestigt sein. Auf diese Weise lässt sich eine einfache und kostengünstige Befestigung der Trennwand am Getriebegehäuse erreichen. Die Befestigung ist bevorzugt so ausgestaltet, dass sich dadurch auch eine Abdichtung des Entlüftungsraumes zu der zentral angeordneten Getriebeeingangswelle hin ergibt, wie oben beschrieben.

Die pneumatischen Komponenten, deren Abluft durch den Entlüftungsraum in die Umgebung geleitet werden, sind insbesondere als Pneumatikventile und/oder Pneumatikzylinder ausgebildet. Gemäß einer besonders bevorzugten Ausgestaltung ist auch der Pneumatikzylinder eines pneumatisch betätigten Kupplungsausrückers über den Entlüftungsraum entlüftbar.

Die Kupplungsglocke ist bevorzugt einteilig mit dem Getriebegehäuse ausgebildet, beispielsweise ist das Getriebegehäuse mit der Kupplungsglocke ein im Aluminiumdruckgussverfahren hergestelltes Gehäuse.

Die Erfindung wird anhand eines Ausführungsbeispieles, das in der nachfolgenden Figur dargestellt ist, näher erläutert.

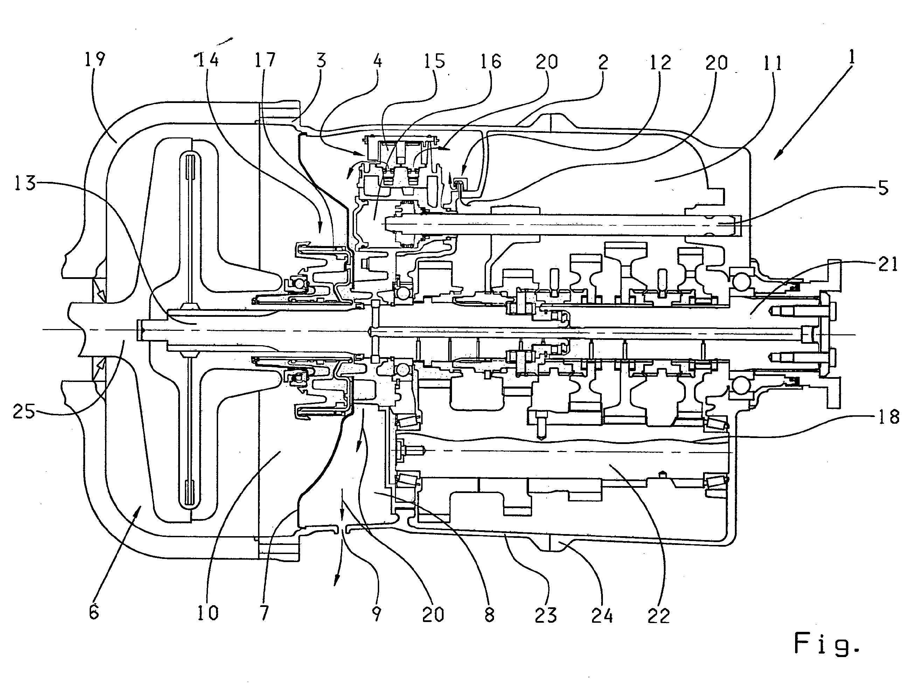

Die Figur zeigt ein erfindungsgemäßes Fahrzeuggetriebe mit einer antriebsseitig angeordneten Anfahrkupplung in einer Schnittdarstellung.

Das dargestellte Fahrzeuggetriebe 1 umfasst ein Getriebegehäuse 2, das in diesem Beispiel aus zwei Gehäuseteilen zusammengesetzt ist, einer antriebsseitigen Gehäusehälfte 23 und einer hinteren, abtriebsseitigen Gehäusehälfte 24. Die antriebsseitige Gehäusehälfte 23 geht antriebsseitig über in die Kupplungsglocke 3, wobei die Kupplungsglocke 3 einstückig mit der antriebsseitigen Gehäusehälfte 23 ausgeführt ist. Weiter schließt sich antriebsseitig an die Kupplungsglocke 3 ein Kupplungsgehäuse 19 an. Das Kupplungsgehäuse 19 ist beispielsweise verschraubt mit der Kupplungsglocke 3. Im Kupplungsgehäuse 19 sind die wesentlichen Teile der als Reibscheibenkupplung ausgeführten Anfahrkupplung 6 angeordnet.

Die Anfahrkupplung 6 ist antriebsseitig über eine Antriebswelle 25 von einem nicht dargestellten Antriebsmotor antreibbar. Von der Anfahrkupplung 6 wird das Antriebsdrehmoment über eine Getriebeeingangswelle 13 in das Fahrzeuggetriebe 1 geleitet. Im Fahrzeuggetriebe 1 wird das Antriebsdrehmoment entweder direkt oder über eine Vorgelegewelle 22 auf eine Getriebeausgangswelle 21 geleitet.

Zur Auswahl geeigneter Übersetzungsstufen im Fahrzeuggetriebe 1 sind Schaltelemente 5 in Form einer Schaltschiene und Schaltgabeln oder Schaltschwingen vorgesehen. Die Schaltelemente 5 werden mittels pneumatischer Komponenten 4 angesteuert und betätigt. Die pneumatischen Komponenten 4 umfassen Pneumatikventile 15 und Pneumatikzylinder 16.

Die Pneumatikzylinder 16, von denen nur einer in der Figur sichtbar ist, sind in einer Anschlussplatte der antriebsseitigen Getriebehälfte 23 integriert, welche den Getriebeinnenraum bzw. den Getriebeölraum 11 zur Antriebsseite hin abschließt. Die Pneumatikventile 15 zur Steuerung der Schaltelemente 5 sind in einer Einheit zusammengefasst und im oberen Bereich der Anschlussplatte angeordnet.

Der Raum, der die Pneumatikventile 15 umgibt und antriebsseitig an die Pneumatikzylinder 16 anschließt ist der Entlüftungsraum 8. Dieser Entlüftungsraum 8 wird begrenzt antriebsseitig durch eine Trennwand 7, abtriebsseitig durch die der antriebsseitigen Gehäusehälfte 23 mit Anschlussplatte und radial nach außen durch die Kupplungsglocke 3. Der Entlüftungsraum 8 ist, abgesehen von der unten beschriebenen Austrittsöffnung 9 und der Durchgangsöffnung 12, im Wesentlichen luftdicht nach allen Seiten abgedichtet.

Der Raum antriebsseitig von der Trennwand 7 bildet den Kupplungsraum 10, in dem die Anfahrkupplung 6 angeordnet ist. Der Kupplungsraum 10 ist durch die Trennwand 7 gegenüber dem Entlüftungsraum 8 abgedichtet, sodass kein Schmutz und keine Feuchtigkeit von dem Entlüftungsraum 8 in den Kupplungsraum 10 gelangen kann.

Im unteren Bereich der Kupplungsglocke 3 ist eine Austrittsöffnung 9 vorgesehen, die den Entlüftungsraum 8 mit der Umgebung verbindet. Eine Durchgangsöffnung 12 ist im oberen Bereich der Anschlussplatte in der antriebsseitigen Getriebehälfte 23 vorgesehen. Diese Durchgangsöffnung 12 verbindet den Getriebeinnenraum, hier Getriebeölraum 11 genannt, mit dem Entlüftungsraum 8. Somit kann sowohl die Luft aus dem Getriebeölraum 11, als auch die Abluft der pneumatischen Komponenten 4, 15 und 16 durch den Entlüftungsraum 8 und durch die Austrittsöffnung 9 in die Umgebung entlüftet werden.

Die Durchgangsöffnung 12 kann mit einer Abdeckung versehen werden, die den Durchgang von Schmutz, Öl und Feuchtigkeit verhindert, den Luftaustausch jedoch nicht behindert. Die Durchgangsöffnung 12 mündet in jedem Fall so hoch in den Getriebeölraum, dass der Getriebeölspiegel 18 in jeder bestimmungsgemäßen Lage des im Fahrzeug eingebauten Fahrzeuggetriebes 1 unterhalb der Durchgangsöffnung 12 liegt.

Ein zentraler Kupplungsausrücker 14 ist zwischen der Anfahrkupplung 6 und der antriebsseitigen Gehäusehälfte 23 des Fahrzeuggetriebes 1 koaxial zur Getriebeeingangswelle 13 angeordnet. Der zentrale Kupplungsausrücker 14 umfasst einen Pneumatikzylinder 17 mit ringförmigem Querschnitt, der gemeinsam mit der Trennwand 7 an der Anschlussplatte der antriebsseitigen Gehäusehälfte 23 befestigt ist. Somit wird in vorteilhafter Weise die Befestigung des zentralen Kupplungsausrückers 14 benutzt, um damit gleichzeitig die Trennwand 7 ohne weitere Befestigungselemente am Getriebegehäuse 2 zu befestigen.

Die Luftströme zur Entlüftung des Fahrzeuggetriebes 1 sind durch Luftrichtungspfeile 20 in der Figur angegeben. Ein Teil der durch den Entlüftungsraum 8 geführten Luft kommt dabei aus dem Getriebeölraum 11 bzw. Getriebeinnenraum durch die Durchgangsöffnung 12 in den Entlüftungsraum 8. Ein anderer Teil der Luft kommt aus den pneumatischen Komponenten 4 zur Steuerung und Betätigung der Schaltelemente 5 und des Kupplungsausrückers 14.

Durch das verhältnismäßig große Volumen des Entlüftungsraumes 8 kann sich insbesondere die Abluft aus den pneumatischen Komponenten 4 im Entlüftungsraum 8 ausdehnen und beruhigen.

Die Anordnung der Austrittsöffnung 9 an der Unterseite des Fahrzeuggetriebes 1 und die Anordnung der pneumatischen Komponenten 4 und der Durchgangsöffnung 12 im oberen Bereich des Getriebegehäuses 2 sorgen in Verbindung mit dem verhältnismäßig großen Volumen des Entlüftungsraumes 8 außerdem dafür, dass Wasser und Schmutz nicht an die empfindlichen Getriebebauteile gelangen und dadurch keine Schäden verursachen können, weil Wasser und Schmutz von außen durch die Austrittsöffnung 9 entgegen der Schwerkraft durch den verhältnismäßig großvolumigen Entlüftungsraum 8 wandern müssten.

### Bezugszeichen

- 1: Fahrzeuggetriebe
- 2: Getriebegehäuse
- 3: Kupplungsglocke
- 4: pneumatische Komponenten
- 5: Schaltelemente
- 6: Anfahrkupplung
- 7: Trennwand
- 8: Entlüftungsraum
- 9: Austrittsöffnung
- 10: Kupplungsraum
- 11: Getriebeölraum
- 12: Durchgangsöffnung
- 13: Getriebeeingangswelle
- 14: Kupplungsausrücker
- 15: Pneumatikventil
- 16: Pneumatikzylinder
- 17: Pneumatikzylinder
- 18: Getriebeölspiegel
- 19: Kupplungsgehäuse
- 20: Luftrichtungspfeile
- 21: Getriebeausgangswelle
- 22: Vorgelegewelle
- 23: antriebsseitige Gehäusehälfte
- 24: abtriebsseitige Gehäusehälfte
- 25: Antriebswelle

## Patentansprüche

1. Fahrzeuggetriebe (1) mit einer antriebsseitig an einem Getriebegehäuse (2) angeordneten Kupplungsglocke (3) und mit pneumatischen Komponenten (4) zum Betätigen von Schaltelementen (5) des Fahrzeuggetriebes (1) und/oder einer Anfahrkupplung (6),
wobei in der Kupplungsglocke (3) eine Trennwand (7) vorgesehen ist, welche in einem Innenraum der Kupplungsglocke (3) getriebeseitig von der Trennwand (7) einen Entlüftungsraum (8) ausbildet,
wobei an der Kupplungsglocke (3) zumindest eine Austrittsöffnung (9) vorgesehen ist, die den Entlüftungsraum (8) mit der Umgebung verbindet, **dadurch gekennzeichnet,**
**dass** die pneumatischen Komponenten (4) derart in dem Getriebegehäuse (2) angeordnet sind, dass Abluft von den pneumatischen Komponenten (4) durch den Entlüftungsraum (8) und die Austrittsöffnung (9) in die Umgebung strömen kann, und dass die Trennwand (7) den Entlüftungsraum (8) wasser- und schmutzdicht zu einem antriebsseitigen Kupplungsraum (10) in der Kupplungsglocke (3) hin abdichtet.

2. Fahrzeuggetriebe nach Anspruch 1, **dadurch gekennzeichnet, dass** die pneumatischen Komponenten (4) einer Getriebesteuerung in der bestimmungsgemäßen Lage des Fahrzeuggetriebes (1) an der Oberseite des Fahrzeuggetriebes (1) angeordnet sind, und dass die Austrittsöffnung (9) an der Unterseite des Fahrzeuggetriebes (1) angeordnet ist.

3. Fahrzeuggetriebe nach einem der vorgenannten Ansprüche, **dadurch gekennzeichnet, dass** im Getriebegehäuse (2) eine Durchgangsöffnung (12) vorgesehen ist, die einen Getriebeölraum (11) mit dem Entlüftungsraum (8) verbindet, wobei die Durchgangsöffnung (12) derart angeordnet ist, dass sie in jeder bestimmungsgemäßen Lage des Fahrzeuggetriebes (1) oberhalb eines Getriebeölspiegels (18) in dem Getriebeölraum (11) liegt.

4. Fahrzeuggetriebe nach einem der vorgenannten Ansprüche, **dadurch gekennzeichnet, dass** die Trennwand (7) von einer Getriebeeingangswelle (13) durchdrungen wird, und dass der Entlüftungsraum (8) zu der Getriebeeingangswelle (13) hin abgedichtet ist.

5. Fahrzeuggetriebe nach Anspruch 4, **dadurch gekennzeichnet, dass** ein zentraler Kupplungsausrücker (14) der Anfahrkupplung (6) koaxial zu der Getriebeeingangswelle (13) im Kupplungsraum (10) angeordnet ist, und dass der Kupplungsausrücker (14) gemeinsam mit der Trennwand (7) antriebsseitig an dem Getriebegehäuse (2) befestigt ist.

6. Fahrzeuggetriebe nach einem der vorgenannten Ansprüche, **dadurch gekennzeichnet, dass** die pneumatischen Komponenten (4) als Pneumatikventile (15) und/oder Pneumatikzylinder (16) ausgebildet sind.

7. Fahrzeuggetriebe nach Anspruch 5 und 6, **dadurch gekennzeichnet, dass** der zentrale Kupplungsausrücker (14) einen Pneumatikzylinder (17) mit einer ringförmigen Querschnittsfläche umfasst, und dass auch der Pneumatikzylinder (17) des zentralen Kupplungsausrückers (14) über den Entlüftungsraum (8) entlüftbar ist.

8. Fahrzeuggetriebe nach einem der vorgenannten Ansprüche, **dadurch gekennzeichnet, dass** die Kupplungsglocke (3) einteilig mit dem Getriebegehäuse (2) ausgebildet ist.

## Claims

1. Vehicle transmission (1) having a clutch housing (3) which is arranged on a transmission housing (2) and having pneumatic components (4) for actuating selector elements (5) of the vehicle transmission (1) and/or a start-up clutch (6), a dividing wall (7) being provided in the clutch housing (3), which dividing wall (7) forms a ventilating space (8) in an interior space of the clutch housing (3) on the transmission side of the dividing wall (7), at least one outlet opening (9) being provided on the clutch housing (3), which outlet opening (9) connects the ventilating space (8) to the surroundings, **characterized in that** the pneumatic components (4) are arranged in the transmission housing (2) in such a way that outlet air from the pneumatic components (4) can flow through the ventilating space (8) and the outlet opening (9) into the surroundings, and **in that** the dividing wall (7) seals the ventilating space (8) in a water-tight and dirt-tight manner with respect to a drive-side clutch space (10) in the clutch housing (3).

2. Vehicle transmission according to Claim 1, **characterized in that** the pneumatic components (4) of a transmission controller are arranged on the upper side of the vehicle transmission (1) in the specified position of the vehicle transmission (1), and **in that** the outlet opening (9) is arranged on the underside of the vehicle transmission (1).

3. Vehicle transmission according to one of the preceding claims, **characterized in that** a through opening (12) is provided in the transmission housing (2), which through opening (12) connects a transmission-oil space (11) to the ventilating space (8), the through opening (12) being arranged in such a way that it lies above a transmission-oil level (18) in the transmission-oil space (11) in every specified position of the vehicle transmission (1).

4. Vehicle transmission according to one of the preceding claims, **characterized in that** the dividing wall (7) is penetrated by a transmission input shaft (13), and **in that** the ventilating space (8) is sealed with respect to the transmission input shaft (13).

5. Vehicle transmission according to Claim 4, **characterized in that** a central clutch release means (14) of the start-up clutch (6) is arranged in the clutch space (10) coaxially with respect to the transmission input shaft (13), and **in that** the clutch release means (14) is fastened together with the dividing wall (7) on the drive side to the transmission housing (2).

6. Vehicle transmission according to one of the preceding claims, **characterized in that** the pneumatic components (4) are configured as pneumatic valves (15) and/or pneumatic cylinders (16).

7. Vehicle transmission according to Claims 5 and 6, **characterized in that** the central clutch release means (14) comprises a pneumatic cylinder (17) with an annular cross-sectional area, and **in that** the pneumatic cylinder (17) of the central clutch release means (14) can also be ventilated via the ventilating space (8).

8. Vehicle transmission according to one of the preceding claims, **characterized in that** the clutch housing (3) is configured in one piece with the transmission housing (2).

## Revendications

1. Transmission de véhicule (1) comprenant une cloche d'embrayage (3) disposée du côté de l'entraînement sur un carter de transmission (2) et des composants pneumatiques (4) pour l'actionnement d'éléments de changement de vitesses (5) de la transmission de véhicule (1) et/ou d'un embrayage de démarrage (6),
une paroi de séparation (7) étant prévue dans la cloche d'embrayage (3), laquelle paroi de séparation constitue un espace de désaérage (8) dans un espace interne de la cloche d'embrayage (3) du côté de la paroi de séparation (7) proche de la transmission,
au moins une ouverture de sortie (9) étant prévue au niveau de la cloche d'embrayage (3), laquelle relie l'espace de désaérage (8) à l'environnement, **caractérisée en ce que**
les composants pneumatiques (4) sont disposés dans le carter de transmission (2) de telle sorte que l'air évacué des composants pneumatiques (4) puisse s'écouler dans l'environnement à travers l'espace de désaérage (8) et l'ouverture de sortie (9), et **en ce que** la paroi de séparation (7) réalise l'étanchéité vis-à-vis de l'eau et de la saleté de l'espace de désaérage (8) par rapport à un espace d'embrayage (10) du côté de l'entraînement dans la cloche d'embrayage (3).

2. Transmission de véhicule selon la revendication 1, **caractérisée en ce que** les composants pneumatiques (4) d'une commande de transmission sont disposés dans la position correcte de la transmission de véhicule (1) au niveau du côté supérieur de la transmission de véhicule (1), et **en ce que** l'ouverture de sortie (9) est disposée au niveau du côté inférieur de la transmission de véhicule (1).

3. Transmission de véhicule selon l'une quelconque des revendications précédentes, **caractérisée en ce que** dans le carter de transmission (2) est prévue une ouverture de passage (12) qui relie un espace d'huile de transmission (11) à l'espace de désaérage (8), l'ouverture de passage (12) étant disposée de telle sorte qu'elle se situe dans chaque position correcte de la transmission de véhicule (1) au-dessus d'un niveau d'huile de transmission (18) dans l'espace d'huile de transmission (11).

4. Transmission de véhicule selon l'une quelconque des revendications précédentes, **caractérisée en ce que** la paroi de séparation (7) est traversée par un arbre d'entrée de transmission (13) et **en ce que** l'espace de désaérage (8) est étanchéifié par rapport à l'arbre d'entrée de transmission (13).

5. Transmission de véhicule selon la revendication 4, **caractérisée en ce qu'**une butée de débrayage centrale (14) de l'embrayage de démarrage (6) est disposée coaxialement à l'arbre d'entrée de transmission (13) dans l'espace d'embrayage (10), et **en ce que** la butée de débrayage (14) est fixée conjointement avec la paroi de séparation (7) du côté de l'entraînement au niveau du carter de transmission (2).

6. Transmission de véhicule selon l'une quelconque des revendications précédentes, **caractérisée en ce que** les composants pneumatiques (4) sont réalisés sous forme de soupapes pneumatiques (15) et/ou de cylindres pneumatiques (16).

7. Transmission de véhicule selon la revendication 5 et la revendication 6, **caractérisée en ce que** la butée de débrayage centrale (14) comprend un cylindre pneumatique (17) avec une surface transversale de forme annulaire et **en ce que** le cylindre pneumatique (17) de la butée de débrayage centrale (14) peut également être désaéré par le biais de l'espace de désaérage (8).

8. Transmission de véhicule selon l'une quelconque des revendications précédentes, **caractérisée en ce que** la cloche d'embrayage (3) est réalisée d'une seule pièce avec le carter de transmission (2).
